(19) Europäisches Patentamt
European Patent Office
Office européen des brevets

(11) Numéro de publication: **0 017 528**
**A1**

# (12) DEMANDE DE BREVET EUROPEEN

(21) Numéro de dépôt: **80400340.8**

(22) Date de dépôt: **14.03.80**

(51) Int. Cl.³: **G 02 F 1/01**
//G02F1/137, H04N5/30

(30) Priorité: **23.03.79 FR 7907387**

(43) Date de publication de la demande:
**15.10.80 Bulletin 80/21**

(84) Etats Contractants Désignés:
**DE GB IT NL**

(71) Demandeur: **"THOMSON-CSF"- SCPI**
**173, Boulevard Haussmann**
**F-75360 Paris Cedex 08(FR)**

(72) Inventeur: **Hareng, Michel**
**"THOMSON-CSF" S.C.P.I. - 173, Bld Haussmann**
**F-75360 Paris Cedex 08(FR)**

(72) Inventeur: **Le Berre, Serge**
**"THOMSON-CSF" S.C.P.I. - 173, Bld Haussmann**
**F-75360 Paris Cedex 08(FR)**

(72) Inventeur: **Spitz, Erich**
**"THOMSON-CSF" S.C.P.I. - 173, Bld Haussmann**
**F-75360 Paris Cedex 08(FR)**

(74) Mandataire: **Wang, Pierre et al,**
**"THOMSON-CSF" - SCPI 173, bld. Haussmann**
**F-75360 Paris Cedex 08(FR)**

## (54) Dispositif optique atténuateur réglable à commande électrique et appareil de prise de vue comportant ce dispositif.

(57) Le dispositif de l'invention décompose la lumière ($R_1$) en deux vibrations lumineuses polarisées, ordinaire ($R_o$) et extraordinaire ($R_e$), à l'aide d'un prisme biréfringent ($Ni_1$). Ces deux vibrations traversent alors deux cellules à cristal liquide ($NH_1$, $NH_2$) de type nématique en hélice à anisotropie diélectrique positive. En l'absence de tension ($V_S$) appliquée aux cellules, les deux vibrations voient leurs directions de polarisation tourner d'un angle ($\theta$) de $\pi/2$ radians, tandis qu'elles sont transmises sans rotation de la polarisation pour une tension $V_S$ donnée, dépendant du type de cristal liquide utilisé. Chaque cellule est suivie d'un polariseur linéaire ($PO_1$, $PO_2$) dont les deux directions de polarisation sont orthogonales l'une par rapport à l'autre. Un second prisme biréfringent ($Ni_2$) combine les deux vibrations en une vibration émergente unique non polarisé ($R_2$).

Application notamment aux caméras de télévision ultra-sensibles.

EP 0 017 528 A1

./...

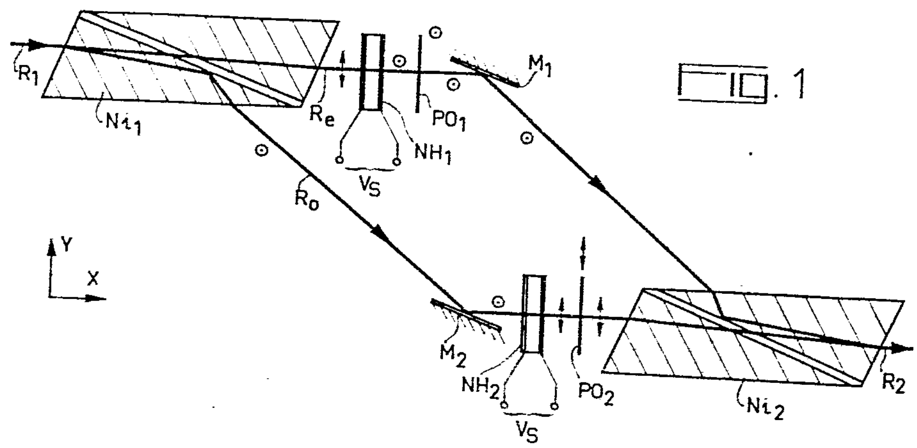


FIG. 1

# DISPOSITIF OPTIQUE ATTENUATEUR REGLABLE A COMMANDE ELECTRIQUE ET APPAREIL DE PRISE DE VUE COMPORTANT CE DISPOSITIF

L'invention se rapporte à un dispositif optique atténuateur réglable à commande électrique et aux caméras de télévision utilisées pour la prise de vue comportant un tel dispositif.

Certains appareils de prise de vue nécessitent l'utilisation de dispositifs optiques atténuateurs réglables à faible perte d'insertion, notamment les caméras de télévision ultrasensibles. Un dispositif comportant deux polariseurs que l'on tourne l'un par rapport à l'autre présente peu d'intérêt pour ce type d'application car il entraîne une perte minimum de 50 % en lumière incidente non polarisée. Les dispositifs existants sont de type mécanique entraînés, par exemple, par un moteur. L'inconvénient majeur de tels dispositifs est de comporter des pièces mobiles de grande dimension. En outre, ils présentent une inertie plus grande que les dispositifs purement électriques ou électroniques et peuvent être bruyants.

Pour pallier ces inconvénients, la présente invention propose un dispositif optique atténuateur réglable à commande électrique et à faible perte d'insertion : les moyens optiques de commande comprennent une cellule à cristal liquide de type nématique en hélice.

L'invention a donc pour objet un dispositif optique atténuateur réglable à commande électrique, principalement caractérisé en ce qu'il comporte des premiers moyens optiques à biréfringence destinés à décomposer

une vibration lumineuse incidente en deux vibrations lumineuses émergentes, ayant des polarisations rectilignes croisées, se propageant le long de deux chemins optiques distincts, la première vibration émergente étant polarisée suivant une première direction et la seconde vibration émergente étant polarisée suivant une seconde direction orthogonale à la première direction, des deuxièmes et des troisièmes moyens optiques destinés à faire tourner les axes de polarisation des premières et secondes vibrations lumineuses d'un angle réglable ; des premier et second polariseurs rectilignes dont les polarisations sont parallèles respectivement au seconde direction et première direction ; des premier et second miroirs destinés à dévier les deux chemins optiques ; et des quatrièmes moyens optiques à biréfringence recombinant en une vibration limineuse émergente unique les première et seconde vibrations lumineuses se propageant suivant deux chemins optiques.

L'invention a également pour objet un appareil de prise de vue comportant un tel dispositif.

L'invention sera mieux comprise et d'autres avantages apparaîtront à la lecture de la description ci-après et à l'examen des figures annexées parmi lequelles :

- la figure 1 est le schéma optique d'un dispositif modulateur de densité optique selon l'invention ;
- les figures 2 à 4 illustrent le fonctionnement d'une cellule à cristal liquide utilisée dans le dispositif de l'invention ;
- les figures 5 et 6 sont les schémas optiques de deux variantes de réalisation selon l'invention.

La figure 1 décrit une première réalisation d'un dispositif optique atténuateur réglable à commande électrique selon l'invention.

Un tel dispositif décompose la lumière en deux

vibrations lumineuses polarisées, ordinaire et extraordinaire, par l'intermédiaire d'un prisme biréfringent.

Sur la figure 1, une vibration lumineuse $R_1$ non polarisée atteint un prisme de Nicol $Ni_1$. La direction de l'axe optique du cristal constituant ce prisme est indiquée par la direction des hachures. La vibration $R_1$ est décomposée en deux vibrations émergentes $R_e$ et $R_o$ qui sont respectivement les vibrations ordinaire et extraordinaire. Comme il est bien connu, ces deux vibrations sont polarisées et leurs directions de polarisation sont orthogonales entre elles. Sur la figure 1, la vibration ordinaire $R_o$ a une direction de polarisation perpendiculaire à un plan de référence X Y, la vibration extraordinaire $R_e$ a une direction de polarisation parallèle au plan XY.

Ces deux vibrations traversent alors deux cellules à cristal liquide de type nématique en hélice à anisotropie diélectrique positive. Ces deux cellules $NH_1$ et $NH_2$ comportent deux électrodes planes reliées à une source de tension réglable $V_S$.

En l'absence de tension appliquée aux électrodes, les deux vibrations voient leur polarisation tourner de $\frac{\pi}{2}$ radians, tandis qu'elles sont transmises sans rotation de la polarisation pour une tension de polarisation $V_S$ d'amplitude donnée, dépendant du type de cristal liquide choisi.

Le fonctionnement de ces cellules est illustré par les figures 2 et 3.

Ces cellules se composent essentiellement de deux parois planes, respectivement 1 et 2, en matériau transparent. Ces deux parois supérieures et inférieures, ainsi que des parois latérales non représentées délimitent un volume rempli de cristal liquide 3. Le cristal liquide utilisé dans l'invention est du type nématique en hélice, à forte anisotropie diélectrique positive.

On peut obtenir une telle configuration soit en frottant les parois 1 et 2 suivant des directions orthogonales entre elles, soit en soumettant ces parois à un bombardement de silice sous incidence rasante suivant ces mêmes directions. Les molécules du cristal liquide vont prendre des directions d'orientation toutes identiques pour un même plan XY de l'axe de référence Z. Au voisinage de la paroi 1 cette orientation sera parallèle à la direction dans laquelle a été effectué le frottement par exemple. Il en est de même au voisinage de la paroi 2. Pour tout plan intermédiaire compris entre les parois 1 et 2 (suivant la direction Z), les molécules du cristal liquide vont prendre des orientations $p_i$ qui vont tourner progressivement de la direction p à la direction p'. L'angle $\theta$ que forme ces deux directions est un angle de $\frac{\pi}{2}$ radians. Les cellules comportent en outre deux électrodes planes 10 et 20 qui sont obtenues par un dépôt métallique sur la face interne des parois 1 et 2, de faible épaisseur, de façon à ce que ces électrodes restent transparentes.

Si une vibration lumineuse polarisée R traverse la cellule de cristal liquide, la direction de polarisation p va tourner pour être en tous points de l'axe Z parallèle aux directions privilégiées de l'orientation des molécules du cristal liquide. La vibration lumineuse R émerge de la cellule à cristal liquide avec une direction de polarisation p' orthogonale à p. Ceci est vrai en l'absence de tension appliquée aux bornes des électrodes 10 et 20.

Lorsqu'on soumet ces électrodes à une tension, les molécules de cristal liquide 3 vont basculer et prendre, si cette tension est suffisante, une orientation parallèle à l'axe Z, comme représenté sur la figure 3. Il s'ensuit qu'une vibration lumineuse polarisée R traversant la cellule à cristal liquide garde sa direction

de polarisation inchangée. La vibration émergente à une direction de polarisation p' parallèle à p.

A titre d'exemple non limitatif, le cristal liquide 3 peut être du Pentyl-cyano-biphényl : 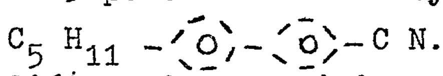. Un tel cristal a une anisotropie diélectrique positive d'environ 10.

L'épaisseur de la cellule est d'environ 10 à 20 µm. Dans ces conditions la tension nécessaire pour faire basculer l'orientation moléculaire est de 1,2 volt.

La figure 4 illustre l'allure de la courbe θ (en radians) en fonction de la tension appliquée entre les électrodes 10 et 20.

Chacune des cellules à cristal liquide est suivie d'un polariseur linéaire. Les directions de polarisation de ces deux polariseurs sont orthogonales entre elles. On peut utiliser des films Polaroïd (marque déposée), par exemple les types $NH_{42}$ ou $NH_{35}$. Ces films peuvent être collés directement sur la face de sortie des cellules à cristal liquide.

Le dispositif de l'invention comporte en outre deux miroirs de renvoi $M_1$ et $M_2$, permettant de dévier les chemins optiques pour que les vibrations $R_o$ et $R_2$ atteignent un second prisme biréfringent $Ni_2$ sous une incidence telle qu'elles soient confondues avec les rayons extraordinaire et ordinaire de ce prisme. Le prisme $Ni_2$ est un prisme identique au prisme $Ni_1$ auquel on aurait fait effectuer une rotation de $\pi$ radians dans le plan XY : la face d'entrée du prisme $Ni_2$ joue le rôle de la face de sortie du prisme $Ni_1$. L'application des lois de l'optique géométrique impose que l'incidence sur le prisme $Ni_2$ du rayon ordinaire $R_o$ doit être égale à l'émergence sur le prisme $Ni_1$ du rayon extraordinaire $R_e$ et l'incidence sur le prisme $Ni_2$ du rayon extraordinaire $R_e$ doit être égale à l'émergence sur le prisme $Ni_1$ du rayon ordinaire $R_o$. Le dispositif présente donc

un centre de symétrie. Les plans des miroirs $M_1$ et $M_2$ doivent être parallèles aux directions de polarisation des vibrations ordinaire et extraordinaire. Il s'en suit que le miroir $M_1$ est placé en aval de la cellule à cristal liquide $NH_1$ et le miroir $M_2$ en amont de la cellule à cristal liquide $NH_2$. Les miroirs $M_1$ et $M_2$ sont des miroirs métalliques, par exemple des miroirs en aluminium poli. En l'absence de tension sur les électrodes des cellules à cristal liquide $NH_1$ et $NH_2$, les vibrations lumineuses $R_e$ et $R_o$ sont transmises sans atténuation. Le dispositif de l'invention ne présente donc que de faibles pertes par insertion en l'absence de tension. Lorsque l'on augmente la tension $V_S$, les vibrations $R_e$ et $R_o$ sont transmises avec une atténuation continûment variable jusqu'à extinction complète. Ces deux vibrations sont recombinées par le prisme $Ni_2$ en une vibration émergente unique $R_2$, non polarisée.

Comme il est bien connu, la convergence ou la divergence des rayons incidents dans un prisme de Nicol ne doit pas excèder un angle d'environ 0.5 radians. Cet angle est appelé angle d'acceptance. D'autres types de prismes biréfringents sont utilisables dans le cadre de l'invention. A titre d'exemple non limitatif, les figures 5 et 6 illustrent deux autres variantes de dispositifs optiques atténuateurs réglables selon l'invention. Les éléments communs à la figure 1 d'une part et aux figures 5 et 6 d'autre part, portent les mêmes références et ne seront plus décrits.

Sur la figure 5, les prismes biréfringents $Roc_1$ et $Roc_2$ sont des prismes de Rochon. La direction de l'axe optique de la première moitié du prisme $Roc_1$ est parallèle au plan XY. La direction de l'axe optique de la seconde moitié est perpendiculaire à ce plan. Si l'incidence de $R_1$ est normale, le rayon ordinaire $R_o$ n'est pas dévié par le prisme $Roc_1$, il s'en suit que le rayon

extraordinaire doit possèder également une incidence normale par rapport au prisme $Roc_2$. D'autre part, l'incidence sur le prisme $Roc_2$ du rayon ordinaire $R_o$ doit être égale à l'émergence sur le prisme $Roc_1$ du rayon extraordinaire $R_e$. Le dispositif présente donc également un centre de symétrie. L'angle d'acceptance du prisme de Rochon est d'environ 0.1 radian. Cet angle plus faible que précédemment reste compatible avec les applications qui seront décrites ultérieurement.

Un autre exemple de réalisation est donné en relation avec la figure 6. Les prismes biréfringents $Wo_1$ et $Wo_2$ sont des prismes de Wollaston. Le dispositif de la figure 6 présente cependant certaines limitations : la vibration ordinaire $R_o$ n'est pas entièrement achromatique. L'incidence sur le prisme $Wo_2$ du rayon ordinaire doit être égale à l'émergence sur le prisme $Wo_1$ du rayon extraordinaire et l'incidence sur le prisme $Wo_2$ du rayon extraordinaire doit être égale à l'émergence sur le prisme $Wo_1$ du rayon ordinaire. Le dispositif présente, comme dans les deux cas précédents, un centre de symétrie. L'angle d'acceptance est d'environ 0,1 radian.

Le dispositif de l'invention peut être utilisé dans toutes les applications nécessitant un dispositif optique atténuateur réglable à faible perte d'insertion. Les caméras de télévision ultra-sensibles, utilisées pour la prise de vues sont des exemples d'appareils dans lesquels le dispositif de l'invention peut être utilisé avec profit. Ces caméras peuvent être trichromes (pour des prises de vue en lumière visible) ou au contraire monochromes, et en particulier utilisées pour les prises de vue en infrarouge. Les caméras de télévision comportent essentiellement deux sortes de matériels : un dispositif optique d'une part, assez semblable à ceux utilisés dans les techniques du cinéma ; un

dispositif électronique d'autre part, transformant l'image optique de la scène à transmettre en un signal électrique. Le dispositif de l'invention peut être inséré entre le dispositif optique et le dispositif électronique.

L'application la plus courante des caméras ultrasensibles est la prise de vue de sujets éloignés. Dans ce dernier cas, l'objectif est un objectif à longue focale de dimensions suffisantes pour que le dispositif de l'invention puisse être rendu solidaire directement de l'objectif.

A titre d'exemple non limitatif, le dispositif de l'invention a été expérimenté en utilisant une caméra munie d'un télé-objectif de 210 mm de focale, ouvert à f/3. Le champ image a un diamètre de l'ordre du centimètre. Ces caractéristiques permettent l'utilisation de prismes de Rochon malgré l'angle d'acceptance restreint de ce type de prisme. Dans cet exemple le dispositif de l'invention a un encombrement hors tout d'environ 5 cm.

L'invention n'est pas limitée aux réalisations décrites. En particulier, d'autres types de prismes peuvent être utilisés, ainsi que d'autres cristaux liquides, en phase nématique en hélice.

## REVENDICATIONS

1. Dispositif optique atténuateur réglable à commande électrique, caractérisé en ce qu'il comporte des premier moyens optiques à biréfringence ($Ni_1$) destinés à décomposer une vibration lumineuse incidente ($R_1$) en deux vibrations lumineuses émergentes ($R_o$, $R_e$) ayant des polarisations rectilignes croisées, se propageant le long de deux chemins optiques distincts, la première vibration émergente ($R_o$) étant polarisée suivant une première direction et la seconde vibration émergente ($R_e$) étant polarisée suivant une seconde direction orthogonale à la première direction ; des deuxièmes et des troisièmes moyens optiques ($NH_1$, $NH_2$) destinés à faire tourner les axes de polarisation des première et seconde vibrations lumineuses d'un angle ($\theta$) réglable ; des premier et second polariseurs rectilignes ($PO_1$, $PO_2$) dont les polarisations sont parallèles respectivement aux seconde direction et première direction ; des premier et second miroirs ($M_1$, $M_2$) destinés à dévier les deux chemins optiques ; et des quatrièmes moyens optiques à biréfringence ($Ni_2$) recombinant en une vibration lumineuse émergente unique ($R_2$) les première et seconde vibrations lumineuses se propageant suivant les deux chemins optiques.

2. Dispositif selon la revendication 1, caractérisé en ce que les premiers et quatrièmes moyens optiques sont constitués chacun par un prisme biréfringent ($Ni_1$, $Ni_2$) et en ce que les première et seconde vibrations lumineuses sont les rayons ordinaires ($R_o$) et extraordinaire ($R_e$) de ces prismes biréfringents.

3. Dispositif selon la revendication 2, caractérisé en ce que les prismes biréfringents sont disposés dans l'espace, l'un par rapport à l'autre, de telle sorte que les rayons ordinaires ($R_o$) et extraordinaire ($R_e$) émergeant du prisme biréfringent ($Ni_1$) constituant les pre-

miers moyens optiques soient, après réflexion sur les premier ($M_1$) et second miroirs ($M_2$), les rayons extraordinaire et ordinaire incidant au prisme biréfringent ($Ni_2$) constituant les quatrièmes moyens optiques.

4. Dispositif selon la revendication 1, caractérisé en ce que les deuxièmes et troisièmes moyens optiques ($NH_1$, $NH_2$) sont constitués chacun par une cellule à cristal liquide(3)en phase nématique en hélice compris entre deux électrodes planes (10, 20) transparentes et en matériau conducteur.

5. Dispositif suivant la revendication 4, caractérisé en ce que les électrodes (10, 20) sont reliées à un générateur de tension variable ($V_S$) permettant de fixer de façon continue l'angle ($\theta$) réglable de rotation de l'axe de polarisation des première ($R_o$) et seconde ($R_e$) vibrations lumineuses, à une valeur comprise entre 0 et $\frac{\pi}{2}$ radians.

6. Dispositif selon l'une quelconque des revendications 1 à 5, caractérisé en ce que la vibration lumineuse incidente ($R_1$) a une fréquence comprise dans la gamme du spectre de la lumière visible.

7. Dispositif selon l'une quelconque des revendications 1 à 5, caractérisé en ce que la vibration lumineuse incidente ($R_1$) a une fréquence comprise dans le spectre de l'infra-rouge.

8. Appareil de prise de vue comprenant des moyens optiques constitués par au moins un objectif, caractérisé en ce qu'il comporte un dispositif modulateur selon l'une quelconque des revendications 1 à 7, disposé sur l'axe optique de l'objectif.

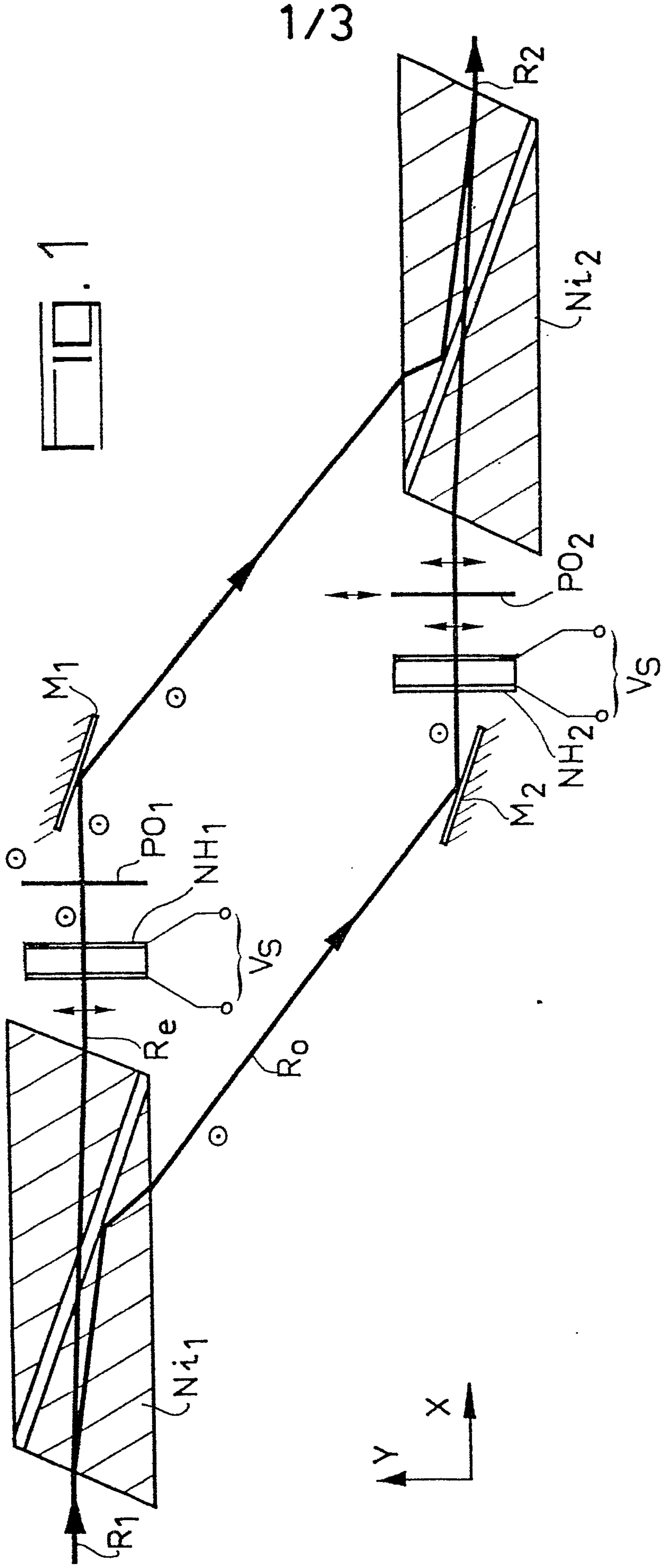


FIG. 1

FIG. 2

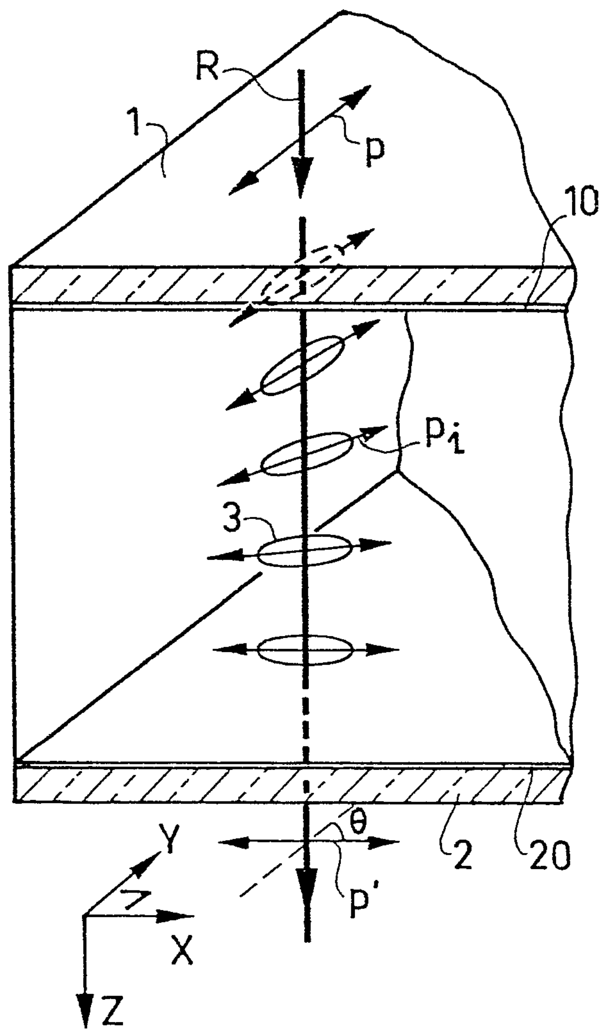


FIG. 3

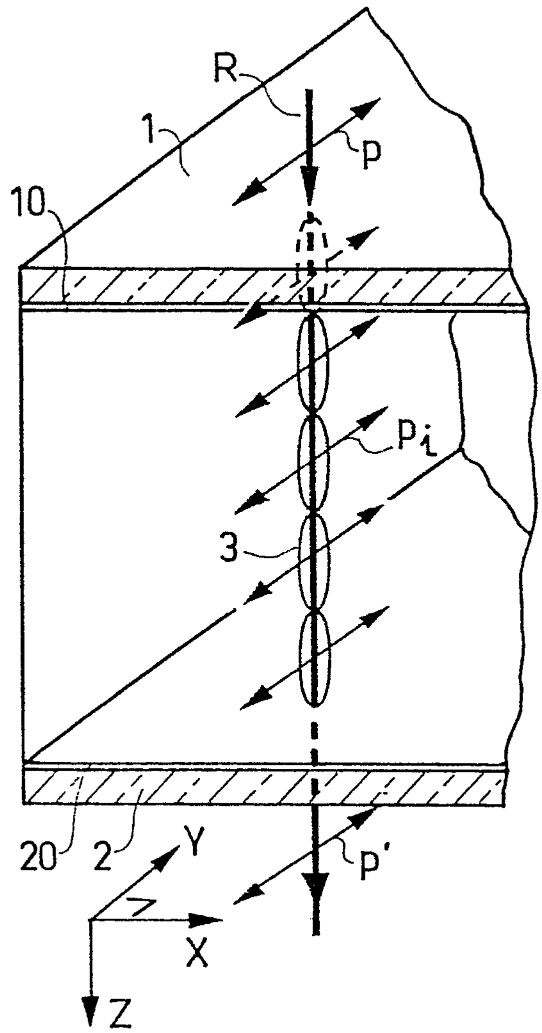


FIG. 4

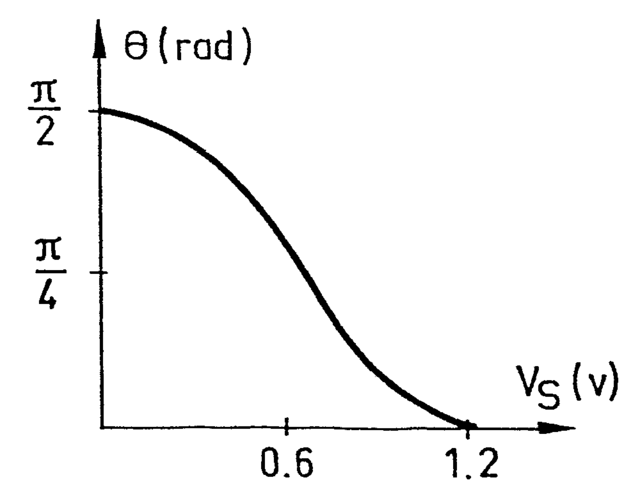

FIG. 5

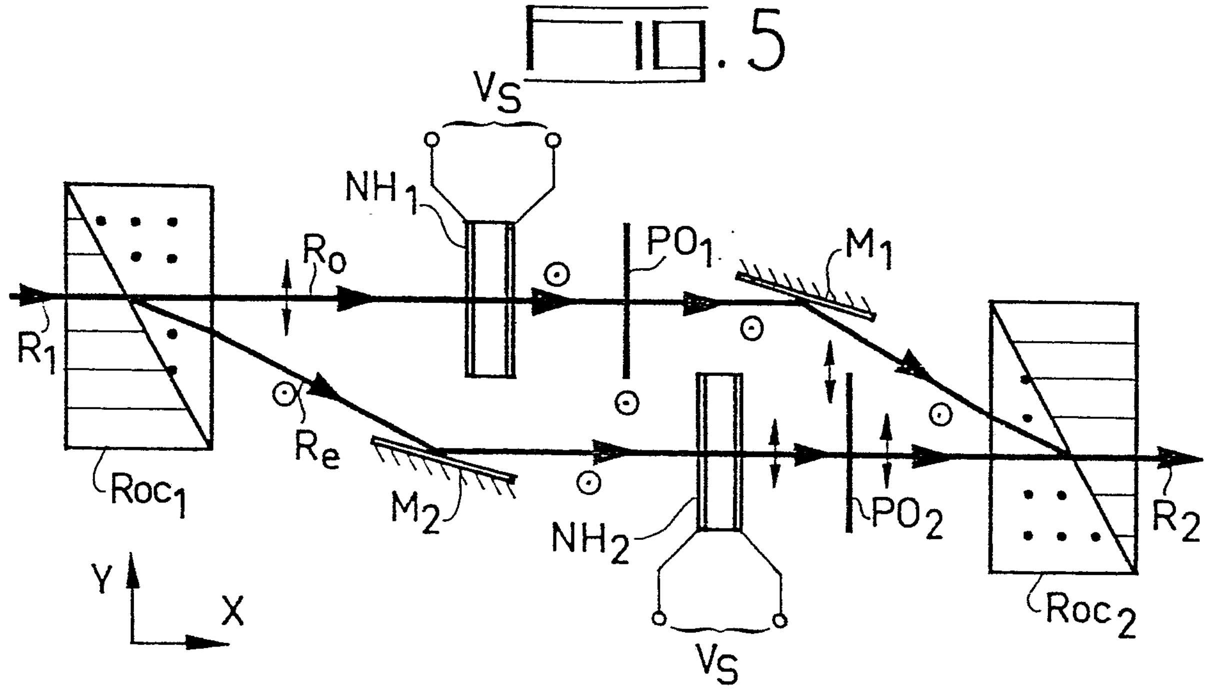
VS
NH1
Ro
PO1
M1
R1
Re
M2
NH2
PO2
R2
Roc1
Roc2
Y
X
VS

FIG. 6

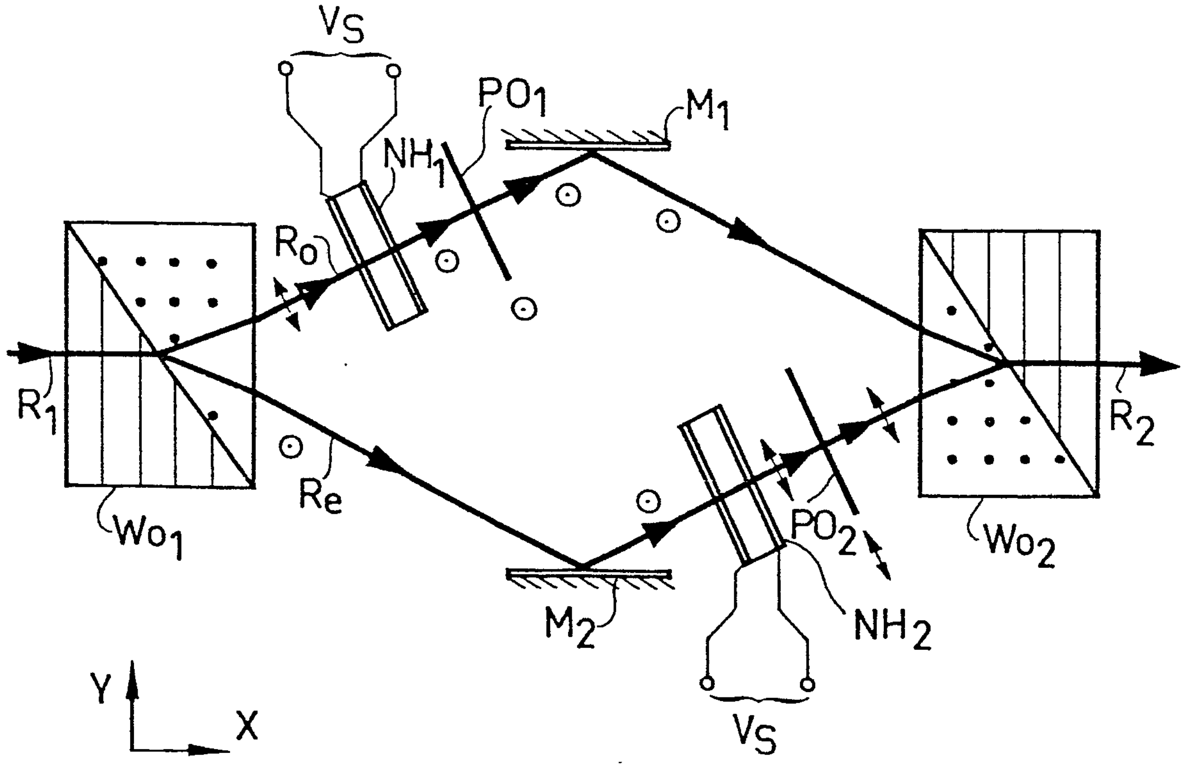
VS
PO1
M1
NH1
Ro
R1
Re
Wo1
M2
PO2
NH2
Wo2
R2
Y
X
VS

0017528

Office européen des brevets

**RAPPORT DE RECHERCHE EUROPEENNE**

Numéro de la demande
EP 80 40 0340

**DOCUMENTS CONSIDERES COMME PERTINENTS**

| Catégorie | Citation du document avec indication, en cas de besoin, des parties pertinentes | Revendication concernee |
|---|---|---|
| | US - A - 3 684 350 (J.L. WENZ)<br>* Colonne 1, ligne 63 - colonne 2, ligne 9; colonne 3, ligne 30 - colonne 4, ligne 3; revendications 1,3,5; figures 1,2 *<br>-- | 1,5-7 |
| | IBM TECHNICAL DISCLOSURE BULLETIN, vol. 12, no. 7, décembre 1969 NEW YORK (US) S.H. ROWE: "Light Intensity Modulator", page 910.<br>* Page 910 *<br>-- | 1,5,6 |
| | GB - A - 1 409 711 (REDIFON)<br>* Page 1, lignes 25-54; page 2, lignes 41-96; page 4, lignes 15-48; figures 1-4 *<br>-- | 1-3,5,6 |
| A | US - A - 3 495 892 (J.L. DAILEY)<br>* Revendications 1-3,10,11; figures 7-9 *<br>-- | 1,5-7 |
| A | US - A - 3 719 414 (J.L. WENTZ)<br>* Revendication 1; figures 1A,1B et 7 *<br>-- | 1,5-7 |
| A | JOURNAL OF THE OPTICAL SOCIETY OF AMERICA, vol. 55, no. 4, avril 1965 NEW YORK (US) E.O. AMMAN: "Modification of Devices Normally Operating between<br>./.. | 1,5-7 |

CLASSEMENT DE LA DEMANDE (Int. Cl. 3)

G 02 F 1/01 //
G 02 F 1/137
H 04 N 5/30

DOMAINES TECHNIQUES RECHERCHES (Int. Cl. 3)

G 02 F 1/01
G 02 F 1/03
G 02 F 1/137
G 02 F 1/31

CATEGORIE DES DOCUMENTS CITES

X: particulièrement pertinent
A: arrière-plan technologique
O: divulgation non-ecrite
P: document intercalaire
T: théorie ou principe a la base de l'invention
E: demande faisant interference
D: document cite dans la demande
L: document cite pour d'autres raisons

&: membre de la même famille, document correspondant

X Le présent rapport de recherche a été établi pour toutes les revendications

| Lieu de la recherche | Date d'achevement de la recherche | Examinateur |
|---|---|---|
| La Haye | 01-07-1980 | BORMS |

OEB Form 1503.1 06.78

Office européen des brevets

**RAPPORT DE RECHERCHE EUROPEENNE**

Numéro de la demande

EP 80 40 0340



| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | Input and Output Polarizers to Allow their Use with Arbitrarily Polarized Light", pages 412-417.<br>* Pages 412-413; figures 2,3 *<br>-- | | |
| A | US - A - 3 430 048 (CH.B. RUBINSTEIN)<br>* Revendications 1-4; figure 1 *<br>-- | 1 | |
| A | US - A - 3 383 460 (D.H. PRITCHARD)<br>* Revendication 1; figures *<br>-- | 1 | DOMAINES TECHNIQUES RECHERCHES (Int. Cl. 3) |
| A | FR - A - 2 117 358 (HOFFMANN-LA ROCHE)<br>* Revendications 1,2,9-12; figure 2 *<br>---- | 4 | |